Europäisches Patentamt

European Patent Office

Office européen des brevets

(19)

(11) Publication number: **0 357 575**
**A2**

# (12) EUROPEAN PATENT APPLICATION

(21) Application number: 89850253.9

(22) Date of filing: 14.08.89

(51) Int. Cl.5: **F 16 D 49/02**
F 16 D 59/00
// F16H25/20

(30) Priority: 29.08.88 SE 8803012

(43) Date of publication of application:
07.03.90 **Bulletin 90/10**

(84) Designated Contracting States: **DE FR GB IT**

(71) Applicant: **SKF Nova AB**
**S-415 50 Göteborg (SE)**

(72) Inventor: **Nilsson, Sven Walter**
**Fölstigen 5**
**S-433 41 Partille (SE)**

(54) Device for retarding a torque-transferring member.

(57) In a device for effecting retardation of a torque transferring member (15) connected to a motor driven shaft (17) this is rotatably supported thereon. The rotation of the motor driven shaft (17) is tranferred to said member (15) via a helical spring (14) wound about a stationary shaft (13) being concentric with said shaft (17). When the motor is disengaged and said member (15) is subjected to a torque caused by an external load the member (15) is prevented from rotation by the spring (14) being brought to frictional locking against the stationary shaft (13).

Fig. 1

## Description

### A device for effecting a retardation of a torque transferring member

The present invention commonly refers to a device for effecting a retardation of a torque transferring member connected to a first shaft driven by a motor. The invention particularly refers to a device for effecting a retardation of a worm screw forming part of a worm gear, and being arranged to drive the nut or the screw in a screw- and nut driving device incorporating a screw and a nut surrounding and cooperating with the screw.

In driving devices for causing linear motion in which screw and nut devices of the above mentioned type are used, the internal friction therein is so low that the screw and nut device is not self-braking. The low friction means that a load acting upon the device will descend as soon as an external torque acting upon the screw or upon the nut is releaved, which in some cases is unacceptable, e.g. for safety reasons.

It earlier has been suggested to provide arresting means in form of an arresting spring in connection to the nut or the screw in the screw and nut system as shown in for instance SE-A-451084 and SE-A-451085. In these prior art designs the arresting spring in arranged on the secondary side of the gearing, which might result in alternating grasp and release action. Arresting and retarding arrangements alternatively may be provided in connection to the driving motor in such a manner that the output shaft of the motor is arrested or braked, often in dependency of the energy supply to the motor. Hitherto suggested arrangements of this type however have been rather complex and bulky and/or unreliable, sensitive to vibrations and expensive.

One purpose of the present invention is to provide an arresting and braking arrangement acting upon a torque transferring member, which is simple, reliable and insensitive to vibrations. Another purpose of the invention is to provide an arresting and braking arrangement acting on a torque transferring member in which arrangement alternating grasp and release action in avoided between the arresting spring and the member retarding said spring.

These objects are achieved by giving the invention the features stated in the accompany claims.

The invention hereinafter is described with reference to the accompanying drawings, showing an embodiment for exemplifying purpose. This is only intended to illustrate the invention, which may be modified within the scope of the claims.

In the drawings

Fig. 1 shows a longitudinal section through an embodiment of a device according to the invention.

Fig. 2 shows a section along line II-II in Fig. 1.

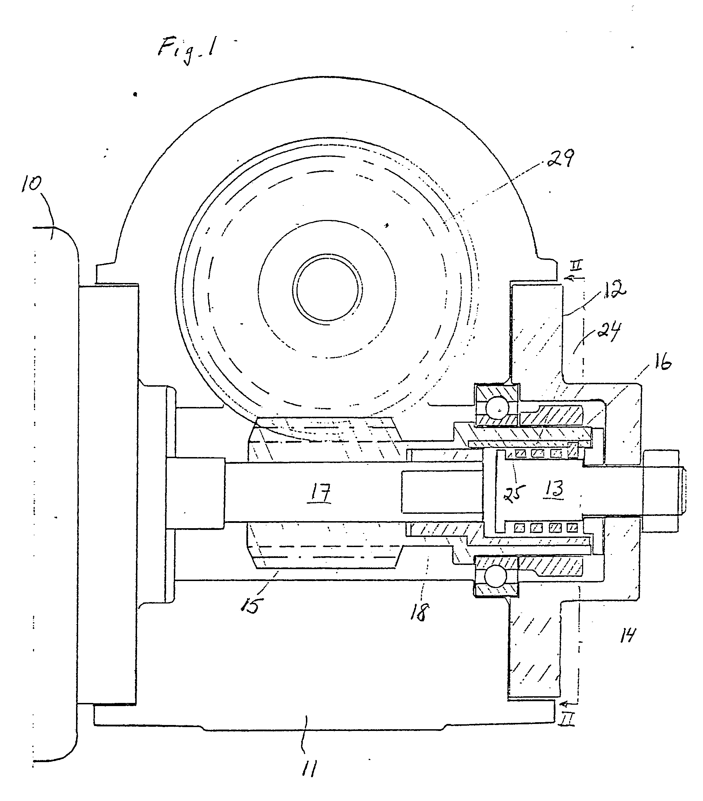

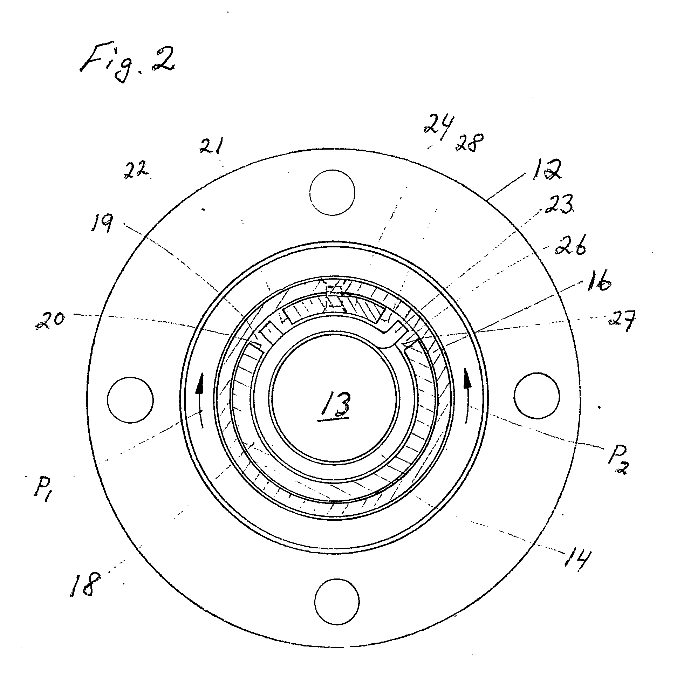

In Fig. 1 and 2 is shown an actuator for effecting linear motion incorporating a driving motor 10, a shaft 17 driven by the motor and a worm screw 15 non-rotatably arranged on the shaft 17. The worm screw 15 forms part of a worm gear and cooperates with a gear wheel 29. The gear wheel 29 in a known manner is arranged upon a sliding or ball screw adapted for rotating this. A sliding nut or ball nut cooperating with the screw is connected to an adjustable tube and it is adjusted to displace this axially at rotation of the screw. The driving shaft 17 may alternatively be arranged to drive the nut such as illustrated in SE-A-451085.

According to the invention the torque transferring member, in the embodiment shown the worm screw 15 is rotatably supported on the shaft 17. In the cover 12 of the gear housing 11 is fitted a stationary shaft 13 connected to the driving shaft 17. A helical spring designed with radially bent-out end portions 22,23 is arranged about a cylindric surface 25 on the shaft 13. The worm screw 15 is connected to a connecting collar 16 intergral therewith, and upon which is fitted a carrier 24 extending radially inwardly. A connecting sleeve 18 is nonrotatably connected to the driving shaft 17.

The end portions 22,23 of the spring are arranged to project into spaces 19,26 formed between side surfaces 21,28 on the carrier 24 extending generally radially and side surfaces 20,27 on the connecting sleeve 18 extending generally radially. At rotation of the shaft 17 and thereby of the connecting sleeve 18 in the direction of arrow $P_1$, the side surface 20 will cause the end portion 22 to contact the side surface 21. The helical spring 14 thereby is opened thus that it is free to rotate relative to the stationary surface 25. The rotation of the shaft 17 consequently is transferred via the connecting sleeve 18, the spring 14 and the connecting collar 16 to the worn gear 15,28.

When the drive from the motor 10 ceases, the external load acting upon the worm gear 15,28 tends to drive the worm screw 15 "bakwards", i.e. in the direction of arrow $P_2$. The side surface 21 thereby will hit the end portion 22, whereby the spring 14 is tightened around the cylindric surface 25 thus that continued rotation of the worm screw 15 is prevented. In order thereby to ascertain an initial restraining force in the spring 14, the fit thereof on the surface 25 is such that a small frictional force occurs when the spring is turned relative to the shaft 13.

At rotation of the shaft 17 in opposite direction the rotation is transferred to the worm gear or this is retarded in a similar manner by cooperation between the end portion 23 and the side surfaces 27,28.

As evident from the above description the spring 14 is arranged on the primary side of the worm gear which means that it can be made with a small diameter. Due to the fact that the spring rotates with the same number of revolutions as the shaft of the motor it becomes fast-rotating, thus ensuring a constant clamping action between the spring 14 and the driving shaft 17.

## Claims

1. A device for effecting a retardation of a torque transferring member (15), which is connected to a first shaft (17) driven by a motor (10),
**characterized therein,**
that the torque transferring member (15) is rotatably supported on the first shaft (17) and that an end portion (22) of a helical spring (14) is arranged to project into a first space (19) between a first surface (21) associated with the torque transferring member (15) and a second surface (20) associated with the first shaft (17), whereby driving of the first shaft (17) causes the second surface (20) to bring the end portion (22) of the spring (14) in contact with the first surface (21) for driving the torque transferring member (15), and whereby the first surface (21) is brought to engagement against the end portion (22) thus that the spring (14) is disformed to engagement against a stationary surface (25) in a bearing housing (11) for the first shaft (17) and for said member (15), thereby preventing the torque transferring member (15) from rotating when subjected to torque caused by external load acting upon said member (15).

2. A device according to claim 1,
**characterized therein,**
that the stationary surface (25) is formed on a stationary, second shaft (13) about which the helical spring (14) is arranged and which is concentric with the first shaft (17) and connected to the bearing housing (11).

3. A device according to claim 1,
**characterized therein,**
that the first surface (21) is provided on a connecting collar (16) firmly connected to the torque transferring member (15).

4. A device according to claim 3,
**characterized therein,**
that the second surface (20) is provided as connecting sleeve (18) nonrotatably connected to the first shaft (17).

5. A device according to claim 3 or 4,
**characterized therein,**
that a portion (24) projecting radially inwarden is provided on the connecting collar (16), whereby the first space (19) is arranged at one side of said portion (24) and a second space (21) being arranged at the other side of the portion, whereby a second end portion (23) of the spring (14) is arranged to project into the second space (26), and where the second end portion (23) cooperates with third and fourth surfaces (27,28) corresponding to the first and second surfaces (20,21) for effecting driving and rotating of the torque transferring member (15) in both directions of rotation.

6. A device as claimed in anyone of the preceeding claims,
**characterized therein,**
that the torque transferring member (15) is constituted by a worm screw forming part of a worm gear, and intended to drive th nut or the screw as a screw and nut driving assembly incorporating a screw and a nut enclosing and cooperating with the screw.

Fig.1

Fig. 2